Europäisches Patentamt

European Patent Office

Office européen des brevets

(11) Veröffentlichungsnummer: **0 577 952 A1**

## EUROPÄISCHE PATENTANMELDUNG

(21) Anmeldenummer: 93107754.9

(22) Anmeldetag: 12.05.93

(51) Int. Cl.5: **C09D 125/14**, C09D 133/06, B05D 7/08, //(C09D125/14, 191:06),(C09D133/06,191:06)

(30) Priorität: 08.07.92 DE 4222410

(43) Veröffentlichungstag der Anmeldung: **12.01.94 Patentblatt 94/02**

(84) Benannte Vertragsstaaten: **AT BE DE DK FR IT NL**

(71) Anmelder: SCHULZ GmbH & Co. KG, FARBEN- UND CHEMISCHE FABRIK Bosenheimer Strasse 200 a W-6550 Bad Kreuznach 1(DE)

(72) Erfinder: Marquard, Martin Pommernstrasse 16 D-55545 Bad Kreuznach(DE)

(54) **Bienenwachshaltige Holzlasur.**

(57) Eine Holzlasur besteht zu mehr als 65 Gew.-% aus Wasser und darin dispergiert, aus 5 bis 24 Gew.-% Acrylsäureester-Styrol-Copolymeren und 0,4 bis 6 Gew.-% Bienenwachs.

EP 0 577 952 A1

Rank Xerox (UK) Business Services
·3. ·C/3.6/3.3.1·

Die Erfindung bezieht sich auf einen bienenwachshaltige Holzlasur.

Bienenwachshaltige Holzlasuren zeichnen sich neben ihrem angenehmen Bienenwachsgeruch durch ihre wasserabweisende Wirkung aus und verleihen dem Holz einen Glanz, welcher die natürliche Schönheit und Maserung betont. Sie werden insbesondere für Möbel, Holzdecken, Regale und dgl. im Innenbereich verwendet.

Da Bienenwachs in Wasser unlöslich ist, stellen die bekannten Bienenwachslasuren Lösungen von Bienenwachs in organischen Lösungsmitteln dar, beispielsweise in Terpentin, Terpentinersatz oder Test-Benzin. Abgesehen davon, daß organische Lösungsmittel gesundheitsgefährdend, feuergefährlich und umweltschädigend sind, haben die bekannten Bienenwachslasuren den Nachteil, daß nach dem Auftragen und Trocknen eine matte, klebrige Oberfläche entsteht, die durch Polieren entfernt werden muß. Dies ist mit einem erheblichen Arbeitsaufwand und einer erheblichen Staub- und Schmutzanfall verbunden, wenn man beispielsweise an das Nachpolieren einer ganzen Holzdecke denkt. Doch selbst nach dem Polieren behält die Oberfläche durch die Eigenklebrigkeit des Bienenwachses eine gewisse Klebrigkeit bei, so daß an ihr Schmutz, beispielsweise Fingerabdrücke, leicht haften bleiben.

Darüber hinaus müssen die bekannten Bienenwachsholzlasuren in relativ dicker Schicht aufgetragen werden, damit das Nachpolieren überhaupt durchgeführt werden kann, so daß der Lasurverbrauch relativ groß ist.

Auch läßt die wasserabweisende Wirkung der bekannten Bienenwachslasuren noch zu wünschen übrig. So können sich nicht nur Wasserflecken bilden, vielmehr sind bestimmte Flecken, beispielsweise durch Rotwein, Cola-Getränke oder Kaffee, kaum zu beseitigen. Durch den Geruch des organischen Lösungsmittels, von dem auch nach dem Trocknen Reste zurückbleiben, die sich nie ganz entfernen lassen, wird der angenehme Bienenwachsgeruch beeinträchtigt.

Ein weiterer wesentlicher Nachteil der bekannten Bienenwachslasuren besteht darin, daß sie nicht überstreichbar sind, wenn die Oberfläche erneuert werden muß. Sie müssen dann mit einem organischen Lösungsmittel, wie Terpentin, entfernt werden. Man kann sich vorstellen, mit welchem Zeitaufwand und vor allem mit welchem Schmutzanfall dies verbunden ist, wenn beispielsweise der Anstrich einer Holzdecke erneuert werden soll.

Auch ist es bekannt, wässerige Acrylsäureester-Styrol-Copolymer-Dispersionen zum Imprägnieren und Grundieren von Holz zu verwenden, bevor die Lasur oder ein Deckanstrich aufgetragen wird. Es sind also zwei Arbeitsgänge erforderlich und damit ein entsprechender Zeitaufwand, nicht zuletzt wegen der relativ langen Trockenzeit der Grundierung. Die wasserabweisende Wirkung eines solchen Anstrichs wird durch die Lasur bzw. den Decklack hervorgebracht. Damit sich die Grundierung verfestigt, d.h. fest am Holz haftet, muß der wässerigen Acrylsäureester-Styrol-Copolymer-Dispersion ein Filmbildner, beispielsweise ein Propylenglykol-n-butylester, also wieder ein unerwünschtes organisches Lösungsmittel, zugesetzt werden.

Aufgabe der Erfindung ist es, eine bienenwachshaltige Holzlasur bereitzustellen, die ohne Verwendung organischer Lösungsmittel und ohne Nachpolieren zu einer schnelltrocknenden, einwandfrei aussehenden, extrem wasserabstoßenden Oberfläche führt, die problemlos überstrichen werden kann.

Dies wird erfindungsgemäß mit der im Anspruch 1 gekennzeichneten Holzlasur erreicht. In den Unteransprüchen sind vorteilhafte Ausgestaltungen der Erfindung wiedergegeben.

Die erfindungsgemäße Lasur enthält als Hauptbestandteile ein dispergiertes Acrylsäureester-Styrol-Copolymeres, dispergiertes Bienenwachs und Wasser. Darüber hinaus kann es weitere Zusatzstoffe enthalten, wie ein Dispergiermittel, ein Konservierungsmittel, ein Entschäumungsmittel, ein Verdickungsmittel und/oder Farbpigmente.

Das Acrylsäureester-Styrol-Copolymere und das Bienenwachs werden in Form wässeriger Dispersionen zugegeben. Damit enthält die erfindungsgemäße Lasur als Lösungsmittel ausschließlich Wasser, ist also frei von organischen Lösungsmitteln. Sofern der eine oder andere Zusatzstoff im Handel nur in einem organischen Lösungsmittel erhältlich ist und er in dieser handelsüblichen Form zugegeben wird, ist die Menge des organischen Lösungsmittels in der Lasur so gering, daß sie als vernachlässigbar betrachtet werden kann.

Die Unlöslichkeit von Bienenwachs in Wasser wird erfindungsgemäß also dadurch umgangen, daß das Bienenwachs in Form einer wässerigen Dispersion eingesetzt wird, und zwar ist dies eine sehr feinteilige Dispersion mit einem relativ hohen Wassergehalt.

Die mittlere Teilchengröße der dispergierten Bienenwachsteilchen in der erfindungsgemäßen Lasur beträgt vorzugsweise weniger als 10 µm, insbesondere weniger als 1 µm. So hat sich eine wässerige Dispersion mit einer Teilchengröße der Bienenwachsteilchen von 0,1 bis 0,5 µm als hervorragend geeignet zur Herstellung der erfindungsgemäßen Lasur erwiesen.

Der Bienenwachsgehalt einer solchen wässerigen Dispersion, aus der die erfindungsgemäße Lasur hergestellt wird, beträgt im allgemeinen 10 bis 30

Gew.-%, vorzugsweise etwa 20 Gew.-%. Solche feinteiligen

Bienenwachsdispersionen lassen sich durch einen entsprechend langen, intensiven Dispergiervorgang, aber auch durch Ausfällen, beispielsweise durch Abkühlen einer heißen Lösung, erhalten. Dabei hat sich ein schwach saurer pH-Wert der wässerigen Bienenwachsdispersion, die zur Herstellung der erfindungsgemäßen Lasur verwendet wird, von 4,5 bis 6,5 als vorteilhaft erwiesen.

Die mittlere Teilchengröße der dispergierten Acrylsäureester-Styrol-Copolymer-Teilchen der erfindungsgemäßen Lasur sollte weniger als 0,5 μm betragen, vorzugsweise weniger als 0,2 μm. Mit einer mittleren Teilchengröße des Acrylsäureester-Styrol-Copolymeren von 0,01 bis 0,1 μm wurden die besten Ergebnisse erzielt. Die Konzentration des Acrylsäureester-Styrol-Copolymeren in der wässerigen Dispersion, die zur Herstellung der erfindungsgemäßen Lasur verwendet wird, liegt im allgemeinen bei 20 bis 60 Gew.-%. Das Acrylsäureester-Styrol-Copolymere besteht vorzugsweise zu 55 bis 60 Gew.-% aus Acrylsäureester-Einheiten und zu 40 bis 45 Gew.-% aus Styrol-Einheiten.

Wenn die wässerige Bienenwachsdispersion, die zur Herstellung der erfindungsgemäßen Lasur verwendet wird, allein auf Holz aufgetragen wird, entsteht eine klebrige, nicht wasserbeständige, milchig aussehende Holzoberfläche. Es bildet sich kein Film, vielmehr entstehen kleine Wachskügelchen auf der Holzoberfläche.

Wenn andererseits Holz mit der wässerigen Acrylsäureester-Styrol-Copolymer-Dispersion, die zur Herstellung der erfindungsgemäßen Lasur verwendet wird, allein behandelt wird, führt dies zu einer nicht haftenden Schicht (deshalb wird ein solches Copolymeres als Imprägnier- und Grundiermittel nur zusammen mit einem Filmbildner eingesetzt), wobei diese Schicht ebenfalls nicht wasserbeständig ist.

Es ist deshalb überraschend, daß ein Gemisch aus dispergiertem Acrylsäureester-Styrol-Copolymeren und dispergiertem Bienenwachs, wie es in der erfindungsgemäßen Lasur vorliegt, zu einem wasserbeständigen, festhaftenden Film führt, der sich durch eine extrem wasserabweisende Wirkung auszeichnet. Dabei wird der erfindungsgemäßen Lasur kein gesonderter Filmbildner zugesetzt.

Darüber hinaus trocknet die erfindungsgemäße Lasur in etwa 1/2 bis 1 h (bis zur Griffestigkeit) und damit relativ schnell, gegenüber der wässerigen Acrylsäureester-Styrol-Copolymer-Dispersion und der wässerigen Bienenwachs-Dispersion, die jeweils etwa die doppelte Trockenzeit benötigen.

Die mit der erfindungsgemäßen Lasur versehene Holzoberfläche weist eine derart wasser- und schmutzabweisende Wirkung auf, daß Rotwein-, Kaffee-, Limonaden- und Cola- und dergl. Getränke-Flecken mit einem handelsüblichen Haushaltsreiniger mit kaltem oder warmem Wasser mühelos und restlos entfernt werden können. Auch ist die mit der erfindungsgemäßen Lasur behandelte Holzoberfläche problemlos abwaschbar, beispielsweise kann ein Nikotinfilm mit einem üblichen Haushaltsreiniger mühelos abgewaschen werden.

Weiterhin entsteht mit der erfindungsgemäßen Lasur eine transparente samtige Oberfläche mit Seidenglanz, ohne daß nachpoliert werden muß. Die erfindungsgemäße Lasur macht also das Holz pflegeleicht und dekorativ, ohne daß außer dem Auftragen ein weiterer Arbeitsgang erforderlich wäre. Durch den Seidenglanzeffekt wird die natürliche Schönheit des Holzes und der Maserung noch stärker hervorgehoben. Schattierungen treten nicht auf.

Mit der erfindungsgemäßen Lasur behandelte Holzoberflächen sind problemlos und beliebig oft überstreichbar, und zwar mit der erfindungsgemäßen Bienenwachslasur ebenso wie mit einer anderen wasserverdünnbaren Lasur, Vorstreichfarbe oder einem wasserverdünnbaren Decklack.

Trotz der Wasserundurchlässigkeit ist eine mit der erfindungsgemäßen Lasur versehene Holzoberfläche atmungsaktiv, d.h. wasserdampfdurchlässig. Dies ist deswegen von Bedeutung, weil heutzutage gerade die preiswerteren Hölzer, wie Fichte und Tanne, meist nicht abgelagert sind, also eine relativ hohe Holzfeuchte besitzen. Ohne ausreichende Wasserdampfdurchlässigkeit der Lasur würden diese Hölzer daher leicht reissen. Die erfindungsgemäße Lasur führt also zu einem einwandfreien Versiegelungseffekt, d.h. es kann zwar Wasserdampf von innen nach außen diffundieren, aber kein flüssiges Wasser von außen in das Holz eindringen.

Die erfindungsgemäße Lasur ist farbtonbeständig, d.h. bei Holz, das mit der erfindungsgemäßen Lasur behandelt worden ist, tritt keine bzw. nur eine sehr langsame Vergilbung auf. Das frische Aussehen des Holzes bleibt dadurch erhalten.

Mit der erfindungsgemäßen Lasur kann neues und altes, verbautes Holz geschützt werden, einheimische Holzarten ebenso wie exotische Hölzer. Der Holzuntergrund wird damit absolut wasserfest gemacht. Das Wasser perlt dauerhaft ab. Dabei wird dem Holz ein angenehmer intensiver Bienenwachsgeruch verliehen, ohne daß irgendwelche störende Nebengerüche auftreten.

Die erfindungsgemäße Lasur ist im Innenbereich beispielsweise für Holzdecken, Innenverkleidungen, Naßräume, Saunen, Schnitzwerk, Regale, Türen, Tische und andere Möbel verwendbar, und zwar auch für Hölzer in rohem Zustand, also ohne vorheriges Imprägnieren. Für den Außenbereich ist die erfindungsgemäße Lasur hingegen weniger geeignet, da sie nicht witterungsbeständig ist.

Wie erwähnt, beträgt die Trockenzeit der erfindungsgemäßen Lasur bis zur Griffestigkeit je nach Temperatur und Luftfeuchtigkeit im allgemeinen etwa 30 bis 60 min. Diese relativ kurze Trockenzeit kommt vor allem bei Weichhölzern zum Tragen, die eine relativ saugende Wirkung besitzen und deshalb ein oder gar mehrmals nachgestrichen werden müssen. Die Temperatur beim Auftragen der erfindungsgemäßen Lasur sollte zwischen 5 und 25°C liegen. Unter 5°C ist keine ausreichende Filmbildung mehr sichergestellt, während bei mehr als 25°C die Trockenzeit für ein einwandfreies Auftragen zu kurz wird.

Wenn das zu lasierende Holz schmutzig oder fettig ist, braucht es lediglich abgewaschen zu werden. Die erfindungsgemäße Bienenwachslasur kann dann auf die nasse Oberfläche aufgetragen werden, ohne daß diese vorher getrocknet werden müßte.

Zum Auftragen der erfindungsgemäßen Lasur kann ein Pinsel, für große, glatte Flächen auch ein Lappen, beispielsweise ein Leinenlappen, oder irgendein anderes Gerät oder irgendeine andere Methode, eingesetzt werden, wie vom Lasurauftragen bekannt. Um Ansätze zu vermeiden, sollte der Auftrag vorzugsweise in Richtung der Holzmaserung erfolgen.

Wenn die erfindungsgemäße Lasur von der Holzoberfläche aus irgendeinem Grund wieder entfernt werden soll, ist dies durch Auslaugen, z.B. mit Natron- oder Kalilauge, ohne weiteres möglich.

Auch ist die erfindungsgemäße Lasur sehr ergiebig. So können mit 1 l je nach Saugfähigkeit des Holzes bis zu 20 m$^2$ lasiert werden, während der Lasurauftrag mit einer handelsüblichen Bienenwachslasur mit einem organischen Lösungsmittel bei 1 l im allgemeinen nur etwa 10 m$^2$ beträgt.

Die hohe Wasserbeständigkeit der erfindungsgemäßen Lasur kann im übrigen durch einen Pappkarton verdeutlicht werden, dessen Kanten mit einem Dichtmittel abgedichtet sind. Wenn die Innenwände des Kartons mit der erfindungsgemäßen Lasur versehen werden, kann in den Karton Wasser gegeben werden, wobei das Wasser über Tage hinweg nicht austritt.

Wenn der erfindungsgemäßen Lasur ein Farbton verliehen werden soll, können ihr, soweit dies die Transparenz der Lasur zuläßt, Farbpigmente zugesetzt werden. Als besonders geeignet haben sich Eisenoxid-Farbpigmente erwiesen, die beispielsweise in den Farben rot, gelb und orange angeboten werden. Es handelt sich dabei um sogenannte wasserlösliche, transparente Farbpigmente.

Der pH-Wert der erfindungsgemäßen Lasur ist im allgemeinen neutral bis leicht sauer, d.h. er liegt im allgemeinen im Bereich zwischen 6 und 7,5.

Wie erwähnt, kann die erfindungsgemäße Lasur neben dem Acrylsäureester-Styrol-Copolymeren und Bienenwachs noch weitere Zusatzstoffe enthalten.

So ist ein Dispergiermittel vorteilhaft, das die dispergierten Acrylsäureester-Styrol-Copolymer-Teilchen und Bienenwachsteilchen stabilisiert, also deren Absetzen verhindert. Dabei hat sich eine wässerige Lösung eines Alkylammoniumsalzes höherer Polycarbonsäuren als geeignet erwiesen. Damit kann die Lagerstabilität der erfindungsgemäßen Lasur von einigen Monaten auf mehrere Jahre verlängert werden. Die Konzentration des Dispergiermittels bzw. dieses Alkylammoniumsalzes in der erfindungsgemäßen Lasur beträgt maximal 0,5 Gew.-%, vorzugsweise ca. 0,1 Gew.-%, und im allgemeinen 0,03 bis 0,3 Gew.-%.

Auch kann die erfindungsgemäße Lasur ein Konservierungsmittel enthalten, um sie antibakterizid und antifungizid zu machen. Die Menge des Konservierungsmittels kann z.B. 0,01 bis 1 Gew.-% betragen.

Ferner ist es zweckmäßig, ein Entschäumungsmittel zuzusetzen. Das Entschäumungsmittel kann beispielsweise ein Siloxan-Polymeres sein. Das Entschäumungsmittel bzw. das Siloxan-Polymere liegt im allgemeinen in einer Konzentration von 0,03 bis 0,3 Gew.-%, vorzugsweise weniger als 0,1 Gew.-%, in der erfindungsgemäßen Lasur vor. Durch das Entschäumungsmittel entstehen keine Luftblasen bei der Produktion der Lasur und damit im Gebinde, bzw. beim Auftragen der Lasur.

Um ein tropfgehemmtes Auftragen der Lasur sicherzustellen, erhält sie vorzugsweise ein Verdickungsmittel. Als Verdickungsmittel hat sich für die erfindungsgemäße Lasur insbesondere ein Polyurethan-Verdickungsmittel als geeignet erwiesen. Die Konzentration des Verdickungsmittels in der erfindungsgemäßen Lasur beträgt im allgemeinen höchstens 0,5 Gew.-% und liegt im allgemeinen zwischen 0,05 und 0,3 Gew.-%.

Die nachstehende Lasurzusammensetzung dient der weiteren Erläuterung der Erfindung:

| Bestandteile | Gew.-% |
|---|---|
| (1) Acrylsäureester-Styrol-Copolymeres | 14,4 |
| (2) Dispergiermittel | 0,1 |
| (3) Bienenwachs | 1,4 |
| (4) Konservierungsmittel | 0,1 |
| (5) Entschäumungsmittel | 0,03 |
| (6) Verdickungsmittel | 0,1 |
| (7) Wasser | 83,9 |
| | —————— |
| | 100 |

(1), welches das Bindemittel darstellt, wird in Form einer Acrylsäureester-Styrol-Copolymer-Dispersion zugesetzt, die unter der Bezeichnung "Rhodopas ® DS" von der Firma Rhone-Poulenc in den Handel gebracht wird und einen Feststoffgehalt von 37 bis 39 Gew.-%, eine Viskosität bei 23°C - Brookfield RVD, 50 min$^{-1}$ von 200 bis 300 mPas und eine mittlere Teilchengröße von 0,05 µm besitzt. Das Copolymerisat besteht aus 40 bis 45 Gew.-% Styrol-Einheiten und 60 bis 55 Gew.-% Acrylsäuremethylester-Einheiten und schmilzt zwischen 50 und 87°C.

(2) ist ein Alkylolammoniumsalz einer höhermolekularen Polycarbonsäure und wird als Lösung von der Firma BYK-Chemie GmbH unter der Bezeichnung "Disperbyk" ® angeboten.

(3) wird als Bienenwachsemulsion mit einem Wachsanteil von 18 Gew.-% zugesetzt, wobei die Teilchengröße der Wachsteilchen 0,1 bis 0,3 µm beträgt. Das Lösungsmittel ist Wasser. Die Emulsion besitzt einen pH-Wert von ca. 4,8 bis 5,2. Das Bienenwachs schmilzt bei etwa 80°C. Diese Bienenwachs-Emulsion wird unter der Bezeichnung "Ultralube B 18 C" von der Firma Surface-Chemie GmbH in den Handel gebracht.

5

(4) ist Isothiazolon und wird von der Firma Biochema Schwaben - Dr. Lehmann & Co. unter der Bezeichnung "Hydrorol M" in den Handel gebracht.

(5) ist ein Siloxan-Copolymeres, das in einer Konzentration von etwa 10 % in einem organischen Lösungsmittel von der Firma BYK-Chemie GmbH unter der Bezeichnung "Byk®-Entschäumer 022" in den Handel gebracht wird.

(6) ist ein Polyurethan-Verdickungsmittel, das als ca. 35%ige Lösung von der Firma Berol Nobel AB in den Handel gebracht wird.

Die vorstehenden Komponenten werden in der Reihenfolge (1) bis (7) zugesetzt. Dabei werden die Komponenten (1), (2) und (3) zunächst etwa 1/2 h hochtourig (etwa 1000 Umdrehungen/min) vermischt, worauf die anderen Komponenten zugegeben werden.

## Patentansprüche

1. Bienenwachshaltige Holzlasur, gekennzeichnet durch folgende Zusammensetzung:
   mehr als 65 Gew.-% Wasser und darin dispergiert
   5 bis 20 Gew.-% Acrylsäureester-Styrol-Copolymeres,
   0,4 bis 6 Gew.-% Bienenwachs.

2. Holzlasur nach Anspruch 1, dadurch gekennzeichnet, daß der Anteil des Acrylsäureester-Styrol-Copolymeren 10 bis 18 Gew.-% beträgt.

3. Holzlasur nach Anspruch 1 oder 2, dadurch gekennzeichnet, daß der Anteil des Bienenwachs 1 bis 3 Gew.-% beträgt.

4. Holzlasur nach einem der vorstehenden Ansprüche, dadurch gekennzeichnet, daß die mittlere Teilchengröße der dispergierten Acrylsäureester-Styrol-Copolymer-Teilchen weniger als 0,5 $\mu$m beträgt.

5. Holzlasur nach einem der vorstehenden Ansprüche, dadurch gekennzeichnet, daß die mittlere Teilchengröße der dispergierten Bienenwachsteilchen weniger als 10 $\mu$m beträgt.

6. Holzlasur nach Anspruch 5, dadurch gekennzeichnet, daß die mittlere Teilchengröße der Bienenwachsteilchen weniger als 1 $\mu$m beträgt.

7. Holzlasur nach einem der vorstehenden Ansprüche, dadurch gekennzeichnet, daß sie zusätzlich eines oder mehrere der folgenden Bestandteile enthält: Dispergiermittel, Konservierungsmittel, Entschäumungsmittel, Verdickungsmittel und Farbpigmente.

8. Holzlasur nach Anspruch 7, dadurch gekennzeichnet, daß das Verdickungsmittel ein Polyurethan ist.

9. Holzlasur nach nach Anspruch 7, dadurch gekennzeichnet, daß das Farbpigment Eisenoxid ist.

**10.** Holzlasur nach einem der vorstehenden Ansprüche, dadurch gekennzeichnet, daß ihr pH-Wert 6 bis 7,5 beträgt.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | EP-A-0 363 824 (PPG INDUSTRIES)<br>* Beispiele 5-6 *<br>* Tabellen 1,3 *<br>* Ansprüche 1,6,8 *<br>--- | 1-3 | C09D125/14<br>C09D133/06<br>B05D7/08<br>//(C09D125/14,<br>191:06)<br>(C09D133/06,<br>191:06) |
| A | US-A-4 681 910 (WILLIAM B. CROCKATT)<br>* Beispiele 1-2 *<br>* Anspruch 1 *<br><br>----- | 1,7 | |

**RECHERCHIERTE SACHGEBIETE (Int. Cl.5 )**

C09D
B05D

Der vorliegende Recherchenbericht wurde für alle Patentansprüche erstellt

| Recherchenort | Abschlußdatum der Recherche | Prüfer |
|---|---|---|
| DEN HAAG | 15 OKTOBER 1993 | SIEMENS T. |